# EUROPÄISCHE PATENTSCHRIFT

(11) **EP 1 789 670 B1**
(45) Veröffentlichungstag und Bekanntmachung des Hinweises auf die Patenterteilung: **03.10.2012**
(21) Anmeldenummer: 05777898.7
(22) Anmeldetag: 19.08.2005
(51) Int. Cl.: F02F 7/00, F16J 15/06

(54) **ZYLINDERKOPFHAUBE FÜR EINEN ZYLINDERKOPF EINER BRENNKRAFTMASCHINE**
COVER FOR A CYLINDER HEAD OF AN INTERNAL COMBUSTION ENGINE
COUVERCLE DE CULASSE POUR CULASSE DE MOTEUR A COMBUSTION INTERNE

(30) Priorität: 20.08.2004 DE 102004040656
(43) Veröffentlichungstag der Anmeldung: 30.05.2007
(73) Patentinhaber: MANN + HUMMEL GMBH, 71638 Ludwigsburg (DE); Federal-Mogul Sealing Systems Bretten GmbH, 75015 Bretten (DE); Richard Bergner Verbindungstechnik GmbH & Co KG, 91126 Schwabach (DE)
(72) Erfinder: JESSBERGER, Thomas, 71679 Asperg (DE); LACHMANN, Ines, 74343 Sachsenheim (DE); KOCH, Ingo, 71711 Steinheim (DE); KORN, Alexander, 74363 Güglingen (DE); SCHLEIDEN, Thomas, 71720 Oberstenfeld (DE); WEBER, Andreas, 71691 Freiberg (DE); DAIBER, Michael, 71063 Sindelfingen (DE); GESSNER, Klaus, 75417 Mühlacker (DE); WALZ, Timo, 75053 Gondelsheim (DE); SALAMEH, Ralf, 75053 Gondelsheim (DE); SCHNEIDER, Wilhelm, 91126 Rednitzhembach (DE); WESTPHAL, Daniel, 92237 Sulzbach-Rosenberg (DE)
(74) Vertreter: Seyboth, Matthias
(86) Internationale Anmeldenummer: PCT/EP2005/054092
(87) Internationale Veröffentlichungsnummer: WO 2006/021545

(56) Entgegenhaltungen:
- WO-A-2004/099509
- DE-A1- 19 736 467
- GB-A- 2 026 448
- US-A- 5 687 975
- US-A1- 2003 037 756
- US-A1- 2005 115 532
- US-B1- 6 561 522
- PATENT ABSTRACTS OF JAPAN Bd. 2003, Nr. 04, 2. April 2003 (2003-04-02) & JP 2002 364754 A (MITSUBISHI MOTORS CORP), 18. Dezember 2002 (2002-12-18)
- PATENT ABSTRACTS OF JAPAN Bd. 1014, Nr. 575 (M-1062), 20. Dezember 1990 (1990-12-20) & JP 02 248643 A (KINUGAWA RUBBER IND CO LTD), 4. Oktober 1990 (1990-10-04)

## Beschreibung

Die Erfindung bezieht sich auf eine Zylinderkopfhaube für einen Zylinderkopf einer Brennkraftmaschine nach dem Oberbegriff des Anspruches 1.

Aus der Schrift US 5,687,975 ist ein radial wirkendes Dichtsystem einer Zylinderkopfhaube oder Ölwanne bekannt, wobei das Dichtungselement einen in etwa kreuzförmigen Querschnitt mit angewinkelten Flanken aufweist und mit einem Einlegeteil versehen ist.

In der JP 2002-364754 A ist ein in Richtung der Befestigungseinrichtung wirkendes Dichtsystem zur akustischen Entkoppelung einer Zylinderkopfhaube von einem Zylinderkopf beschrieben.

Die US 6,561,522 B1 zeigt ein radial wirkendes Dichtsystem zwischen zwei nicht näher bestimmten Gehäuseteilen, die in montiertem Zustand in direktem Kontakt stehen. In einer Ausführungsform ist ein U-förmiges Dichtungselement durch ein Verstärkungselement des Gehäusedeckels gehalten. Diese das Verstärkungselement teilweise umschließende Dichtung weist in einer besonderen Ausführung beidseitig eine Verdickung auf.

Die US 2003/037756 A1 offenbart eine Abdeckung, insbesondere eine Zylinderkopfhaube oder eine Ölwanne, die mit einem Dichtsystem, ähnlich wie dem aus der DE 197 36 467 A1 bekannten Dichtsystem mit einem T-Profil zur axialen Abdichtung von Bauteilen, abgedichtet wird. Zusätzlich dichtet ein Teilbereich der Dichtung die Abdeckung auf einer Seite quer zur Montagerichtung zum Gegenflansch.

Bekannte Zylinderkopfhauben werden auf den Zylinderkopf einer Brennkraftmaschine aufgesetzt und mithilfe von Befestigungsschrauben am Zylinderkopf gesichert. Die Befestigungsschrauben werden üblicherweise durch an der Zylinderkopfhaube angeformte Befestigungsaugen geführt und mit dem darunter liegenden Zylinderkopf verliersicher verschraubt. Für einen strömungsdichten Abschluss ist eine umlaufende Dichtung in den Auflagebereich zwischen Zylinderkopfhaube und Zylinderkopf eingesetzt, die durch den Bereich der Befestigungsaugen an der Zylinderkopfhaube geführt ist und von den Befestigungsschrauben in Befestigungsrichtung angedrückt wird. Die Dichtheit zwischen Zylinderkopfhaube und Zylinderkopf wird bei dieser bekannten Lösung durch das Verpressen des Dichtungselementes in Richtung der von den Schrauben erzeugten Befestigungskraft gewährleistet. Die Wirkrichtung der Dichtkraft, welche von dem Dichtungselement übertragen wird, stimmt mit der Wirkrichtung der Befestigungskraft, welche von den Befestigungsschrauben erzeugt wird, überein.

Aufgrund der Verpressung des Dichtungselementes in Richtung der Befestigungskraft ergeben sich hohe Rückstellkräfte, welche von dem zusammengedrückten Dichtungselement auf die Zylinderkopfhaube übertragen werden und insbesondere bei höheren Temperaturen zum Relaxieren der üblicherweise aus Kunststoff hergestellten Zylinderkopfhaube führen können. Um eine derartige Relaxation, welche zu einer Leckage führen kann, zu verhindern, ist es erforderlich, den Anpressdruck von Zylinderkopfhaube auf den Zylinderkopf zu verringern, was jedoch die Gefahr birgt, dass auch die Dichtheit abnimmt.

Zwar kann die Relaxation durch eine erhöhte Anzahl von Befestigungsschrauben verringert werden, weil hierdurch eine annähernd gleichmäßige Flächenerpressung erzielt wird. Außerdem kann auch eine verbesserte Versteifung der Zylinderkopfhaube durch zusätzliche Rippen herbeigeführt werden. Beide Maßnahmen sind aber mit einer Erhöhung des Gewichtes der Zylinderkopfhaube und mit zusätzlichen Kosten verbunden.

Zu berücksichtigen ist schließlich, dass aufgrund der unterschiedlichen Längenausdehnungskoeffizienten der Kunststoff-Zylinderkopfhaube und des üblicherweise aus Aluminium hergestellten Zylinderkopfes die Dichtung auch Schiebe- und Scherkräften unterworfen ist, welche die Dichtung zusätzlich beanspruchen.

Der Erfindung liegt das Problem zugrunde, mit einfachen Maßnahmen eine Zylinderkopfhaube an einem Zylinderkopf zu sichern und über eine lange Betriebszeit eine ausreichend hohe Dichtheit zu gewährleisten.

Dieses Problem wird erfindungsgemäß mit den Merkmalen des Anspruches 1 gelöst. Die Unteransprüche geben zweckmäßige Weiterbildungen an.

Bei der erfindungsgemäßen Lösung ist das Verbindungselement, über das die Zylinderkopfhaube am Zylinderkopf gehalten ist, an einem Verbindungsbereich an der Zylinderkopfhaube angeordnet, wohingegen das Dichtungselement einem Dichtungsbereich an der Zylinderkopfhaube zugeordnet ist. Verbindungsbereich und der Dichtungsbereich sind unabhängig voneinander ausgebildet und örtlich getrennt, sodass das Verbindungselement - beispielsweise eine Verbindungsschraube oder ein Schnapphaken - nicht unmittelbar mit dem Dichtungselement in Kontakt gelangt und insbesondere auch keine unmittelbare Presskraft auf das Dichtungselement ausübt. In Befestigungsrichtung wird eine auf das Dichtungselement wirkende Flächenpressung erzeugt, sodass das Dichtungselement keiner punktuell erhöhten Belastung ausgesetzt ist.

Des Weiteren ist vorgesehen, dass die Kraftlinien der vom Verbindungselement übertragenen Befestigungskraft und der vom Dichtungselement übertragenen Dichtkraft einen Winkel einschließen, also sich schneiden bzw. kreuzen. Die Befestigungskraft des Verbindungselementes verläuft üblicherweise in vertikaler Richtung, da die Zylinderkopfhaube von oben auf den Zylinderkopf aufgesetzt wird und mit Schrauben oder sonstigen Verbindungselementen an diesem befestigt wird. Die Dichtkraft, welche von dem Dichtungselement übertragen wird, schließt mit dieser vertikalen Befestigungskraft einen Winkel ein und liegt insbesondere zumindest annähernd senkrecht zu der Befestigungskraft, wodurch sich eine laterale, insbesondere radiale Dichtkraftkomponente einstellt. Aufgrund dieser Ausführung mit lateral wirkender Dichtung sind die Rückstellkräfte, welche im Bereich der Verbindungselemente auf die Zylinderkopfhaube wirken, stark reduziert. Die Verbindungselemente müssen lediglich die Funktion einer Verliersicherung übernehmen, dagegen ist es nicht erforderlich, eine hohe Anpresskraft zwischen Zylinderkopfhaube und Zylinderkopf zu erzeugen, da die Dichtwirkung etwa in einer Ebene parallel zur Oberseite des Zylinderkopfes erzeugt wird und daher im Wesentlichen unabhängig von der Befestigungskraft ist.

Dies hat zur Folge, dass zum einen das Dichtungselement in vertikaler Richtung, also in Richtung der Befestigungskraft, nur gering beansprucht ist und zum anderen aufgrund der geringen Größe der Befestigungskraft auch nur eine geringe Anzahl von Verbindungselementen erforderlich ist und die Verbindungselemente außerdem einfach ausgeführt sein können, beispielsweise als ein an die Zylinderkopfhaube angespritzter Clips oder Schnapphaken.

Das Dichtungselement kann in der Weise ausgeführt sein, dass es in der Lage ist, zusätzlich zu den Verbindungselementen eine in Richtung der Befestigungskraft der Verbindungselemente wirkende Klemmkraft zu übertragen, über die die Zylinderkopfhaube am Zylinderkopf gehalten ist. Dies kann beispielsweise dadurch realisiert werden, dass das Dichtungselement auf seiner Mantelfläche eine oder mehrere Rastnasen aufweist, die in Ausnehmungen in der Zylinderkopfhaube bzw. im Zylinderkopf eingesetzt werden und die Funktion von Widerhaken haben. Aufgrund der Fähigkeit, eine Klemmkraft zu übertragen, die näherungsweise senkrecht zur Dichtkraft steht, erlaubt das Dichtungselement eine Reduzierung der Verbindungselemente auf eine Mindestanzahl bzw. auf eine besonders einfache Ausführung als Verliersicherung, was beispielsweise durch einen einfachen Formschluss zwischen Zylinderkopfhaube und Zylinderkopf realisiert werden kann.

In das Dichtungselement kann ein Stützkörper eingebracht sein, welcher von dem Dichtkörper des Dichtungselementes zumindest teilweise, gegebenenfalls auch vollständig umschlossen ist. Dieser Stützkörper kann sowohl fest mit einem der Bauteile Zylinderkopf/Zylinderkopfhaube verbunden sein oder aber, gemäß einer weiteren Ausführung, einen Stützkern bilden, der Bestandteil des Dichtungselementes ist und nicht mit dem Zylinderkopf oder der Zylinderkopfhaube verbunden ist. Der Stützkern stabilisiert das Dichtungselement, sodass insbesondere bei der Montage der Zylinderkopfhaube auf den Zylinderkopf ein seitliches Wegknicken des Dichtungselementes verhindert wird.

Das Dichtungselement kann grundsätzlich entweder in der Zylinderkopfhaube oder im Zylinderkopf vormontiert werden. Sowohl bei der Zylinderkopfhaube als auch beim Zylinderkopf sind der jeweilige Verbindungsbereich und der Dichtungsbereich separat ausgeführt, um die vorbeschriebene Unabhängigkeit von Befestigungskraft und Dichtkraft zu erreichen.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine auf einem Zylinderkopf befestigte Zylinderkopfhaube im Verbindungsbereich mit einem als Befestigungsschraube ausgeführten Verbindungselement und einem unabhängig und örtlich getrennt geführten Dichtungselement zwischen beiden Bauteilen,
- Fig. 2: das Dichtungselement in einer vergrößerten Einzeldarstellung,
- Fig. 3: einen Schnitt durch den Dichtungsbereich zwischen Zylinderkopfhaube und Zylinderkopf in einer weiteren Ausführung,
- Fig. 4: das Dichtungselement aus Fig. 3 in einer vergrößerten Einzeldarstellung,
- Fig. 5: ein weiterer Schnitt durch den Dichtungsbereich, jedoch mit einer modifizierten Ausführung der Zylinderkopfhaube,
- Fig. 6: eine weitere modifizierte Ausführung des Dichtungsbereiches,
- Fig. 7: das Dichtungselement an der Zylinderkopfhaube in einer weiteren modifizierten Ausführung,
- Fig. 8: Zylinderkopf und Zylinderkopfhaube einschließlich Dichtungselement in einer weiteren Ausführung,
- Fig. 9: der Dichtungsbereich in einer weiteren modifizierten Ausführung,
- Fig. 10: eine weitere Ausführung mit einem Verbindungselement zwischen Zylinderkopfhaube und Zylinderkopf und einem Dichtungselement,
- Fig. 11: die Ausführung gemäß Fig. 10 mit einer Modifikation.

In den Figuren sind gleiche Bauteile mit gleichen Bezugszeichen versehen.

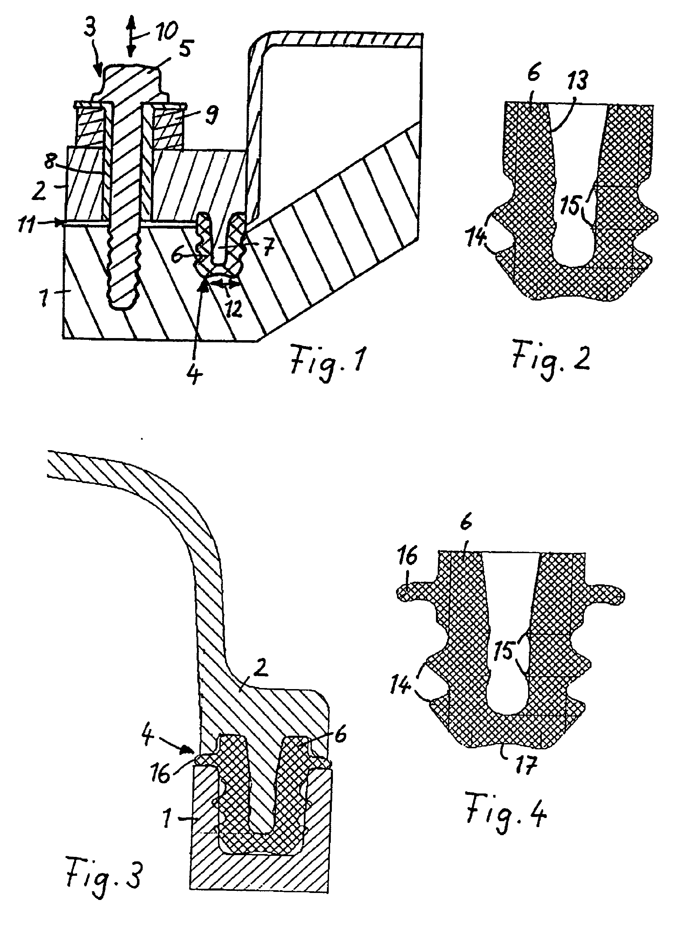

Fig. 1 zeigt einen Zylinderkopf 1 einer Brennkraftmaschine mit einer aufgesetzten Zylinderkopfhaube 2, welche in einem außen liegenden Verbindungsbereich 3 am Zylinderkopf 1 gehalten ist. Separat hiervon und nach innen versetzt ist ein Dichtungsbereich 4 zwischen Zylinderkopf 1 und Zylinderkopfhaube 2 vorgesehen, welcher ein aus dem Stand der Technik bekanntes umlaufendes Dichtungselement 6 umfasst, das in eine Nut eingesetzt ist, die in die Oberseite des Zylinderkopfes eingebracht ist. Das Dichtungselement 6 ist topfförmig ausgebildet, wobei in das Dichtungselement 6 ein Stützkörper 7 einragt, der einteilig mit der Zylinderkopfhaube 2 ausgebildet ist. Das Dichtungselement 6 ist auf den Stützkörper 7 aufgeschoben, wodurch eine Vormontage erreicht wird. Das Dichtungselement 6 läuft benachbart zur Au-βenkante der Zylinderkopfhaube ringsum, wodurch eine umseitige Abdichtung zwischen Zylinderkopf und Zylinderkopfhaube erreicht wird.

Die Verbindung zwischen Zylinderkopfhaube 2 und Zylinderkopf 1 umfasst ein als Befestigungsschraube ausgeführtes Verbindungselement 5, welches durch eine Öffnung im außen liegenden Abschnitt der Zylinderkopfhaube geführt ist, wobei in diese Öffnung eine Stabilisierungshülse 8 eingesetzt ist. Außerdem kann um den Schraubenschaft des Verbindungselementes 5 ein Dichtring 9 gelegt sein, welcher beim Befestigen des Verbindungselementes mit einer Axialkraft beaufschlagt wird. Die von dem Verbindungselement 5 ausgeübte Befestigungskraft wirkt in der mit Doppelpfeil 10 angedeuteten Achsrichtung und hält die Zylinderkopfhaube 2 sicher am Zylinderkopf 1. Um ein Bewegungsspiel in Achsrichtung zu erlauben und außerdem die Zylinderkopfhaube und den Zylinderkopf schwingungsmäßig zu entkoppeln, ist zwischen den benachbarten Seiten von Zylinderkopf 1 und Zylinderkopfhaube 2 im Verbindungsbereich 3 ein Spalt 11 gebildet.

Dieser Spalt 11 wird von dem Dichtungselement 6 überbrückt, sodass auch in Achsrichtung eine sichere und strömungsdichte Verbindung zwischen dem Zylinderkopf 1 und der Zylinderkopfhaube 2 gegeben ist. Das Dichtungselement 6 übt eine zusätzliche, parallel zur Verbindungskraft des Verbindungselementes 5 wirkende Befestigungs- bzw. Klemmkraft zwischen Zylinderkopf und Zylinderkopfhaube aus. Die Dichtkraft, welche von dem Dichtungselement 6 erzeugt wird, verläuft wie mit Doppelpfeil 12 angedeutet in Radialrichtung und liegt somit senkrecht zur Befestigungskraft gemäß Pfeil 10. Hierdurch wird eine wirkungsmäßige Entkopplung zwischen Dichtungselement 6 und Verbindungselement 5 erzielt.

In Fig. 2 ist das Dichtungselement 6 in einer vergrößerten Einzeldarstellung gezeigt. Das Dichtungselement 6 ist topfförmig ausgebildet und weist eine zentrische Ausnehmung 13 auf, in die im befestigten Zustand der Stützkörper 7 (Fig. 1) an der Zylinderkopfhaube einragt. Auf der Mantelaußenseite besitzt das Dichtungselement 6 mehrere umlaufende Rastringe 14, welche im Querschnitt radial nach außen spitz zulaufen und eine verbesserte Klemmung in der Nut bewirken, in die das Dichtungselement 6 im montierten Zustand im Zylinderkopf 1 eingesetzt wird. Auch im Bereich der innenliegenden zentrischen Ausnehmung 13 können Rastnocken bzw. Rastringe 15 zum Festklemmen des eingeführten Stützkörpers vorgesehen sein.

In den Fig. 3 und 4 ist ein erfindungsgemäßes Ausführungsbeispiel dargestellt. Das Dichtungselement 6 besitzt benachbart zu seiner im außen liegenden Boden 17 gegenüberliegenden Stirnseite eine ringförmig umlaufende und radial nach außen abstehende Trennlippe 16, die in den Spalt zwischen Zylinderkopf 1 und Zylinderkopfhaube 2 einragt. Diese Trennlippe 16 aus Dichtmaterial bewirkt eine effektive Schwingungsentkopplung zwischen Zylinderkopf und Zylinderkopfhaube.

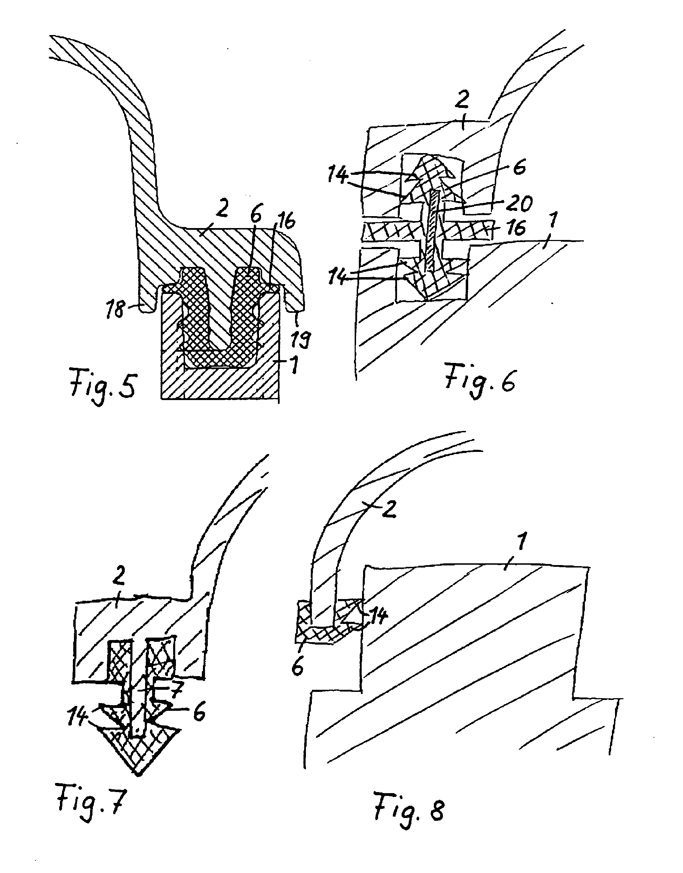

Das Ausführungsbeispiel nach Fig. 5 entspricht im Wesentlichen demjenigen nach Fig. 3 und 4, jedoch mit dem Unterschied, dass im Bereich der Zylinderkopfhaube 2 axial überstehende Abschnitte 18 und 19 ausgebildet sind, die das Dichtungselement 6 an gegenüberliegenden Seiten ein Stück weit axial übergreifen, wodurch der Spalt zwischen Zylinderkopf 1 und Zylinderkopfhaube 2 überbrückt wird.

Im nicht beanspruchten Ausführungsbeispiel nach Fig. 6 ragt das Dichtungselement 6 in gegenüberliegende nutförmige Ausnehmungen in der Zylinderkopfhaube 2 bzw. im Zylinderkopf 1 ein. Das Dichtungselement 6 ist bezüglich einer Mittelebene spiegelsymmetrisch ausgebildet und besitzt einen festen Stützkern 20, welcher vollständig vom Material des Dichtungselementes umschlossen ist und dieses stabilisiert. Im mittleren Abschnitt weist das Dichtungselement 6 die radial nach außen gerichtete, in diesem Ausführungsbeispiel scheibenförmige Trennlippe 16 auf. Die axialen Endabschnitte des Dichtungselementes 6 besitzen eine ausgeprägte rippenförmige Struktur mit Rastringen 14, die dem Dichtungselement eine tannenförmige Struktur verleihen. Diese Rastringe 14 verbessern die axiale Klemmkraft, welche das Dichtungselement 6 sowohl auf den Zylinderkopf 1 als auch auf die Zylinderkopfhaube 2 ausübt.

Im nicht beanspruchten Ausführungsbeispiel nach Fig. 7 besitzt das Dichtungselement 6 eine zentrische Ausnehmung, in die ein vertikal nach unten abstehender Stützkörper 7 an der Zylinderkopfhaube 2 eingesetzt ist. Die äußere Mantelfläche des Dichtungselementes 6 weist wiederum die tannenbaumähnliche Verrippung mit Rastringen 14 auf, die in eine Ausnehmung im Zylinderkopf eingesetzt werden. Im Unterschied zum vorhergehenden Ausführungsbeispiel ist aber das Dichtungselement nach Fig. 7 nicht spiegelsymmetrisch bezüglich einer Mittel-Querebene ausgeführt, vielmehr ist der der Zylinderkopfhaube 2 benachbarte Abschnitt des Dichtungselementes mit geradlinigen Seitenflächen ausgebildet.

In dem nicht erfindungsgemäßen Ausführungsbeispiel gemäß Fig. 8 besitzt das Dichtungselement 6 lediglich auf einer Seite überstehende Rastelemente 14, welche radial nach außen spitz zulaufen und eine vertikale Seitenwand am Zylinderkopf 1 beaufschlagen.

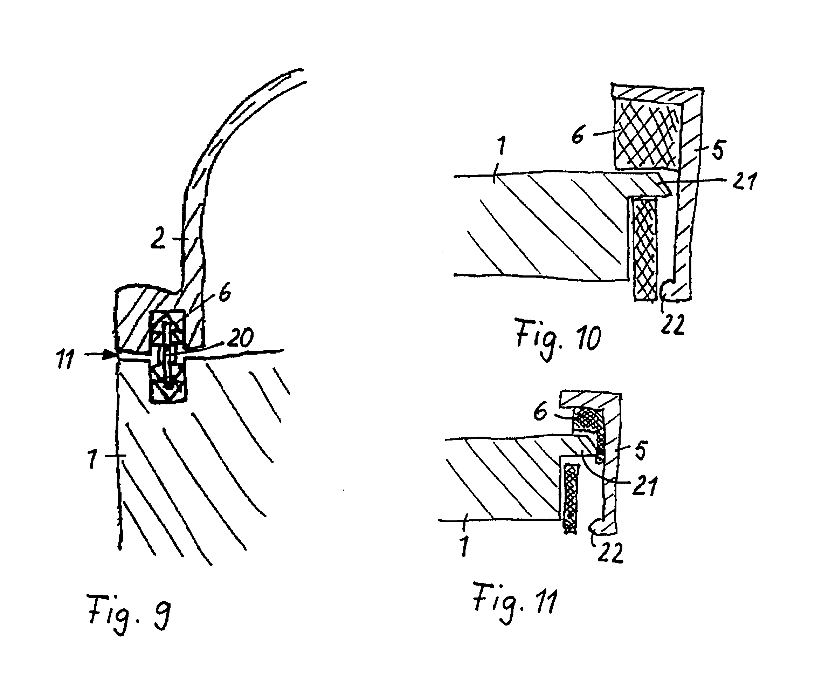

Das nicht erfindungsgemäße Ausführungsbeispiel gemäß Fig. 9 entspricht im Wesentlichen demjenigen nach Fig. 6, jedoch mit dem Unterschied, dass das Dichtungselement 6 gemäß Fig. 9 keine mittlere, scheibenförmige Trennlippe aufweist, wodurch der Spalt 11 zwischen den zugewandten Seiten von Zylinderkopf 1 und Zylinderkopfhaube 2 auch nicht mit Dichtungsmaterial des Dichtungselementes ausgefüllt ist. Die Entkopplung zwischen Zylinderkopf und Zylinderkopfhaube entsteht dadurch, dass diese beiden Bauteile über das zwischenliegende Dichtungselement 6 auf Abstand gehalten werden, wobei das Dichtungselement 6 in den nutförmigen Ausnehmungen sowohl im Zylinderkopf 1 als auch in der Zylinderkopfhaube 2 liegt.

In den nicht beanspruchten Ausführungsbeispielen gemäß den Fig. 10 und 11 ist die Verbindung zwischen Zylinderkopf 1 und Zylinderkopfhaube 2 mithilfe eines als Clips ausgeführten Verbindungselementes 5 hergestellt, welches als einteilig mit der Zylinderkopfhaube ausgebildetes bzw. an diese angespritztes Bauteil ausgeführt ist. Am Zylinderkopf 1 ist im Verbindungsbereich eine radial nach außen überstehende Schulter 21 ausgebildet, welche in Bezug auf eine Rastnase 22 am Verbindungselement 5 einen Hinterschnitt bildet, über den die Zylinderkopfhaube mit Formschluss verliersicher am Zylinderkopf 1 gehalten ist.

In der nicht erfindungsgemäßen Ausführung gemäß Fig. 11 erstreckt sich das Dichtungselement 6 bis zur außenliegenden Stirnseite der Schulter 21, was den Vorteil bietet, dass diese Stirnseite der Schulter 21 nicht in unmittelbaren Kontakt mit dem Verbindungselement 5 an der Zylinderkopfhaube gelangen kann, wodurch eine wirkungsvolle Schwingungsentkopplung zwischen Zylinderkopf und Zylinderkopfhaube gewährleistet ist.

## Patentansprüche

1. Zylinderkopfhaube für einen Zylinderkopf einer Brennkraftmaschine, mit einem Verbindungselement (5) zur Befestigung der Zylinderkopfhaube (2) am Zylinderkopf (1) und einem Dichtungselement (6) zwischen Zylinderkopfhaube (2) und Zylinderkopf (1),wobei dass das Verbindungselement (5) einem Verbindungsbereich (3) und das Dichtungselement (6) einem Dichtungsbereich (4) zugeordnet ist und Verbindungsbereich (3) und Dichtungsbereich (4) unabhängig voneinander ausgebildet und örtlich getrennt sind, wobei die Kraftlinien der vom Verbindungselement (5) übertragbaren Befestigungskraft und der vom Dichtungselement (6) übertragbaren Dichtkraft einen Winkel einschließen,
**dadurch gekennzeichnet**,
das Dichtungselement (6) eine umlaufende, ringförmige Trennlippe (16) zur Separierung von Zylinderkopf (1) und Zylinderkopfhaube (2) aufweist, wobei die Trennlippe (16) einteilig mit dem Dichtkörper des Dichtungselements (6) ausgebildet ist, wobei das Dichtungselement (6) topfförmig ausgebildet ist.

2. Zylinderkopfhaube nach Anspruch 1,
**dadurch gekennzeichnet,**
**dass** das Dichtungselement (6) zusätzlich eine Klemmkraft überträgt, die parallel zu der vom Verbindungselement (5) übertragbaren Befestigungskraft gerichtet ist.

3. Zylinderkopfhaube nach Anspruch 1 oder 2,
**dadurch gekennzeichnet,**
**dass** das Dichtungselement (6) an einem der Bauteile Zylinderkopf (1)/Zylinderkopfhaube (2) gehalten ist und in eine Ausnehmung (13) am jeweils anderen Bauteil einragt.

4. Zylinderkopfhaube nach einem der Ansprüche 1 bis 3,
**dadurch gekennzeichnet,**
**dass** das Dichtungselement (6) auf seiner Mantelfläche mindestens eine Rastnase aufweist.

5. Zylinderkopfhaube nach Anspruch 4,
**dadurch gekennzeichnet,**
**dass** die Rastnase als umlaufender Rastring (14) ausgeführt ist.

6. Zylinderkopfhaube nach Anspruch 5,
**dadurch gekennzeichnet,**
**dass** eine Mehrzahl axial beabstandeter, umlaufender Rastringe (14) vorgesehen ist.

7. Zylinderkopfhaube nach einem der Ansprüche 1 bis 6,
**dadurch gekennzeichnet,**
**dass** das Dichtungselement (6) einen Stützkörper (7, 20) zumindest teilweise umschließt.

8. Zylinderkopfhaube nach Anspruch 7,
**dadurch gekennzeichnet,**
**dass** der Stützkörper (7) an einem der Bauteile Zylinderkopf (1)/Zylinderkopfhaube (2) befestigt ist.

9. Zylinderkopfhaube nach Anspruch 7,
**dadurch gekennzeichnet,**
**dass** der Stützkörper als Stützkern (20) ausgebildet ist, der unabhängig vom Zylinderkopf (1) und der Zylinderkopfhaube (2) ausgeführt ist.

## Claims

1. Cylinder-head cover for a cylinder head of an internal combustion engine, with a connecting element (5) for attaching the cylinder-head cover (2) at the cylinder head (1), and a sealing member (6) between cylinder-head cover (2) and cylinder head (1), the connecting element (5) being allocated to a connecting area (3) and the sealing element (6) to a sealing area (4), and connecting area (3) and sealing area (4) being designed independently from each other and locally separated, the lines of force of the fastening force transmittable by the connecting element (5) and of the sealing force transmittable by the sealing element (6) including an angle,
**characterized in that**
the sealing member (6) features a circumferential annular separating lip (16) for separating cylinder head (1) and cylinder-head cover (2), the separating lip (16) being designed as one piece with the sealing member of the sealing element (6), the sealing element (6) having a pot-shaped design.

2. Cylinder-head cover according to claim 1,
**characterized in that**
the sealing element (6) transmits additionally a clamping force which is directed parallel to the fastening force transmittable by the connecting element (5).

3. Cylinder-head cover according to claim 1 or 2,
**characterized in that**
the sealing element (6) is held at one of the components cylinder head(1)/cylinder-head cover (2) and projects into a recess (13) at each component.

4. Cylinder-head cover according to one of the claims 1 to 3,
**characterized in that**
that the sealing element (6) features at least one locking catch on its outside surface.

5. Cylinder-head cover according to claim 4,
**characterized in that**
the locking catch is designed as circumferential locking ring (14).

6. Cylinder-head cover according to claim 5,
**characterized in that**
a plurality of axially spaced circumferential locking rings (14) is provided.

7. Cylinder-head cover according to one of the claims 1 to 6,
**characterized in that**
the sealing element (6) encloses a support structure (7, 20) at least partially.

8. Cylinder-head cover according to claim 7,
**characterized in that**
the support structure (7) is attached to one of the components cylinder head (1)/cylinder-head cover (2).

9. Cylinder-head cover according to claim 7,
**characterized in that**
the support structure (7) is designed as support core (20) which is designed independently of the cylinder head (1) and the cylinder-head cover (2).

## Revendications

1. Couvercle de culasse pour une culasse d'un moteur à combustion interne, avec un élément de jonction (5) servant à fixer le couvercle de culasse (2) à la culasse (1) et avec un élément d'étanchéité (6) entre le couvercle de culasse (2) et la culasse (1), l'élément de jonction (5) étant attribué à une zone de jonction (3) et l'élément d'étanchéité (6) étant attribué à une zone d'étanchéité (4), et la zone de jonction (3) et la zone d'étanchéité (4) étant formées indépendamment l'une de l'autre et disposées à des emplacements distincts, les lignes de force de la force de fixation pouvant être transférée par l'élément de jonction (5) et de la force d'étanchéité pouvant être transférée par l'élément d'étanchéité (6) formant un angle,
**caractérisé en ce que**
l'élément d'étanchéité (6) présente une lèvre de séparation (16) périphérique et annulaire destinée à séparer la culasse (1) et le couvercle de culasse (2), la lèvre de séparation (16) formant un bloc avec le corps d'étanchéité de l'élément d'étanchéité (6), l'élément d'étanchéité (6) étant réalisé en forme de godet.

2. Couvercle de culasse selon la revendication 1,
**caractérisé en ce que**
l'élément d'étanchéité (6) transfère également une force de serrage qui est dirigée parallèlement à la force de fixation pouvant être transférée par l'élément de jonction (5).

3. Couvercle de culasse selon la revendication 1 ou 2,
**caractérisé en ce que**
l'élément d'étanchéité (6) est maintenu sur un des composants que sont la culasse (1) /le couvercle de culasse (2) et pénètre dans un évidement (13) de chaque composant.

4. Couvercle de culasse selon l'une des revendications 1 à 3,
**caractérisé en ce que**
l'élément d'étanchéité (6) présente au moins un ergot encliquetable sur sa surface extérieure.

5. Couvercle de culasse selon la revendication 4,
**caractérisé en ce que**
l'ergot encliquetable est réalisé en tant que bague encliquetable (14) périphérique.

6. Couvercle de culasse selon la revendication 5,
**caractérisé en ce que**
plusieurs bagues encliquetables (14) périphériques et éloignées les unes des autres en sens axial sont prévues.

7. Couvercle de culasse selon l'une des revendications 1 à 6,
**caractérisé en ce que**
l'élément d'étanchéité (6) encercle, au moins partiellement, un élément d'appui (7, 20).

8. Couvercle de culasse selon la revendication 7,
**caractérisé en ce que**
l'élément d'appui (7) est fixé à un des composants que sont la culasse (1) / le couvercle de culasse (2).

9. Couvercle de culasse selon la revendication 7,
**caractérisé en ce que**
l'élément d'appui est réalisé en forme de noyau d'appui (20) qui est exécuté indépendamment de la culasse (1) et du couvercle de culasse (2).
